# EUROPÄISCHE PATENTANMELDUNG

(11) **EP 0 694 588 A1**
(43) Veröffentlichungstag der Anmeldung: **31.01.1996**
(21) Anmeldenummer: 95110971.9
(22) Anmeldetag: 13.07.1995
(51) Int. Cl.: C09B 62/503, C09B 62/04

(54) **Triphendioxazin-Reaktivfarbstoffe, ihre Herstellung und Verwendung**

(30) Priorität: 26.07.1994 DE 4426375
(71) Anmelder: BAYER AG, D-51368 Leverkusen (DE)
(72) Erfinder: Jäger, Horst, Dr., D-51375 Leverkusen (DE)

(57) **Zusammenfassung**

Verbesserte Triphendioxazin-Reaktivfarbstoffe entsprechend folgender Formel 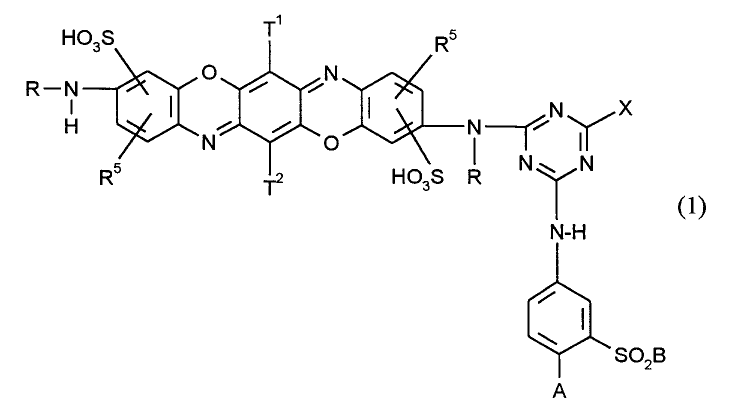
worin
- B: für CH=CH₂ oder CH₂CH₂Z steht, wobei Z einen unter Färbebedingungen abspaltbaren Rest bedeutet,
- A: eine Gruppe der Formel
O-R¹, S-R² oder R³-N-R⁴ bedeutet,
worin
- R¹: für einen substituierten aliphatischen Rest oder für einen aromatischen Rest steht, der insbesondere mit einem Substituenten substituiert ist, der die Löslichkeit erhöht, und worin die übrigen Substituenten in der Beschreibung angegebene Bedeutung haben.

## Beschreibung

Die Erfindung betrifft neue Triphendioxazin-Reaktivfarbstoffe, ihre Herstellung und Verwendung.

Triphendioxazin-Reaktivfarbstoffe sind bereits bekannt, siehe DE-A 2 124 080 (=GB 1 349 513), EP-A-170 838, EP-A-593 016 und EP-A-385 120 (=US-A-5 272 267). Im Zuge gestiegener Anforderungen lag der Erfindung die Aufgabe zugrunde, hinsichtlich Anwendungstechnik und Herstellung verbesserte Farbstoffe zur Verfügung zu stellen.

Die vorliegende Erfindung betrifft Reaktivfarbstoffe der Formel 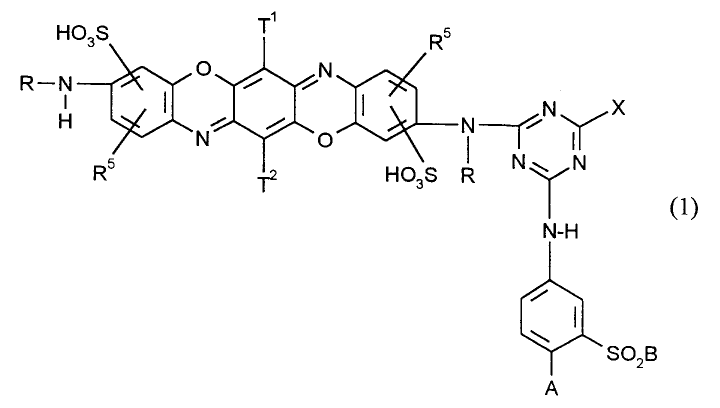
worin
- R: für Wasserstoff oder gegebenenfalls substituiertes C₁ - C₄-Alkyl steht, unabhängig von den anderen Substituenten dieser Bezeichnung,
- T¹ und T²: unabhängig voneinander gleich oder verschieden sind und für Wasserstoff, C₁ - C₄-Alkyl, C₁ - C₄-Alkoxy, Phenoxy, Chlor oder Brom stehen,
- X: Wasserstoff, Methyl oder eine Abgangsgruppe wie Fluor, Chlor, Methylsulfonyl oder Ethylsulfonyl bedeutet,
- B: für CH=CH₂ oder CH₂CH₂Z steht, wobei Z einen unter Färbebedingungen abspaltbaren Rest bedeutet,
- A: eine Gruppe der Formel
O-R¹, S-R² oder R³-N-R⁴ bedeutet,
worin
- R¹: für einen substituierten aliphatischen Rest oder für einen aromatischen Rest steht, der insbesondere mit einem Substituenten substituiert ist, der die Löslichkeit erhöht,
- R²: für einen aliphatischen oder aromatischen Rest,
- R³: für Wasserstoff, einen aliphatischen, cycloaliphatischen oder araliphatischen Rest und
- R⁴: für R³ oder für einen aromatischen Rest steht, oder R³ und R⁴,
gegebenenfalls unter Einschluß eines weiteren Heteroatoms einen Ring bilden können, und worin die Sulfogruppen jeweilig o-ständig zur Gruppe -NR- stehen,
- R⁵: H oder ein für Triphendioxazin-Farbstoffe üblicher Substituent bedeutet.

Beispiele für Substituenten der C₁ - C₄-Alkylreste R sind:
Methoxy, Ethoxy, Carboxy, Sulfo oder Sulfato.

Als Beispiel für Z seien folgende genannt:
OSO₃H, S₂O₃H, OPO₃H₂, OCOCH₃, OSO₂CH₃, OSO₂C₂H₅, Cl.

Die aliphatischen Reste in der Bedeutung von R¹ sind bevorzugt C₁ - C₆-Alkylreste, die gegebenenfalls durch Heteroatome unterbrochen sind und die durch Substituenten aus der Reihe Carboxy, Sulfo und/oder Sulfato substituiert sind.

Die aliphatischen Reste in der Bedeutung von R², R³ und R⁴ sind bevorzugt C₁ - C₆-Alkylreste, die gegebenenfalls durch Heteroatome unterbrochen und die gegebenenfalls substituiert sind. Derartige Substituenten sind beispielsweise folgende:

Carboxy, Sulfo, Sulfato, Methoxy, Ethoxy, Hydroxy, β-Sulfatoethylsulfonyl oder NR⁶W (R⁶ = Wasserstoff, Methyl oder Ethyl), wobei W für eine heterocyclische Reaktivgruppe steht, insbesondere eine solche aus der Reihe der Monofluortriazine, Monochlortriazine oder Fluorpyrimidine.

Beispiele für unterbrechende Heteroatome sind:
O, S, SO₂, NR⁶, NR⁶CO, NR⁶SO₂, wobei R⁶ die angegebene Bedeutung hat. Die cyclischen Reste in der Bedeutung von R³ sind insbesondere 5- oder 6-gliedrige Cycloalkylreste.

Die araliphatischen Reste in der Bedeutung von R³ sind insbesondere solche der Formel 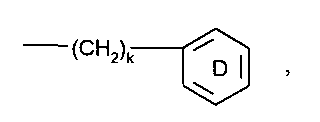
wobei k = 1 bis 4 und der Ring D beispielsweise durch Chlor, Methyl, Methoxy, Carboxy, Sulfo, β-Sulfatoethylsulfonyl, Vinylsulfophenyl u. a. substituiert sein kann.

Aromatische Reste in der Bedeutung von R¹, R² und R⁴ sind insbesondere Phenyl- oder Naphthylreste, die gegebenenfalls substituiert sind, insbesondere durch Methyl, Ethyl, i-Propyl, Methoxy, Ethoxy, β-Hydroxyethoxy, β-Sulfatoethoxy, Chlor, Carboxy, Sulfo, β-Sulfatoethylsulfonyl, Vinylsulfonyl, β-Sulfatoethylsulfomethyl.

R⁵ kann insbesondere für Halogen (Chlor, Brom), C₁-C₄-Alkyl, insbesondere Methyl, Sulfo oder Carboxy stehen. Besonders bevorzugt ist die Bedeutung R⁵ = H.

Im Rahmen der Formel (1) sind Farbstoffe bevorzugt, die mindestens eines der folgenden Merkmale aufweisen:
1. R steht für Wasserstoff
2. T¹ und T² sind gleich oder verschieden und stehen für Chlor oder Methoxy
3. X bedeutet Fluor oder Chlor
4. B steht für CH₂CH₂OSO₃H
5. Der Rest A in der Bedeutung OR¹, SR², R³-N-R⁴ enthält mindestens einen wasserlöslichmachenden Substituenten insbesondere einen solchen aus der Reihe Carboxy, Sulfo und/oder Sulfato.

Besonders bevorzugt sind Farbstoffe der Formel 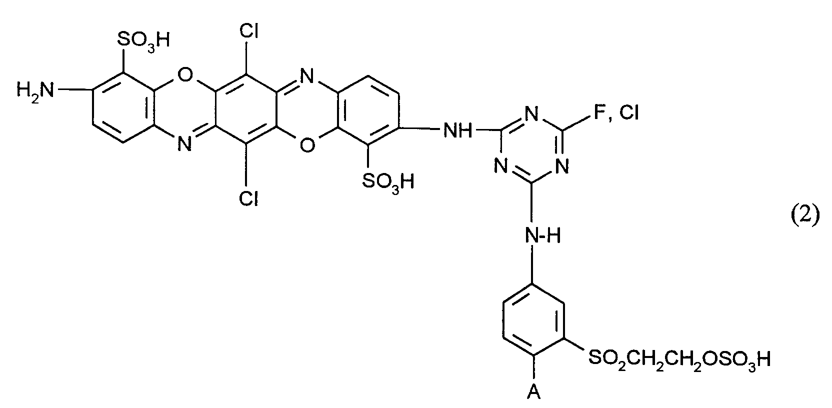
In den Formeln (1) und (2) hat A folgende besonders bevorzugte Bedeutung:
OCH₂CH₂OSO₃H, OCH₂CH₂OCH₂CH₂OSO₃H, SCH₂COOH, SCH₂CH₂OSO₃H, NHCH₂COOH, CH₃NCH₂COOH, NHCH₂CH₂COOH, NHCH₂CH₂SO₃H, CH₃NCH₂CH₂SO₃H, NHCH₂CHOSO₃H, CH₃NCH₂CH₂OSO₃H, NHCH₂CH₂NHCO(CH₂)₁₋₄-COOH, NHCH₂CH₂OCH₂CH₂SO₂CH₂CH₂OSO₃H, NH(CH₂)₂₋₄-SO₂CH₂CH₂OSO₃H 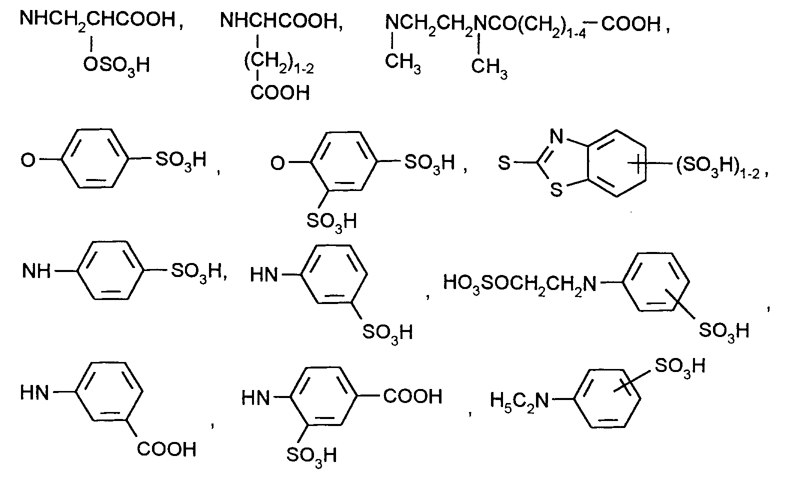
Gegenstand der Erfindung ist weiterhin ein Verfahren zur Herstellung von Farbstoffen der Formel (1), das dadurch gekennzeichnet ist, daß man Triphendioxazinderivate der allgemeinen Formel 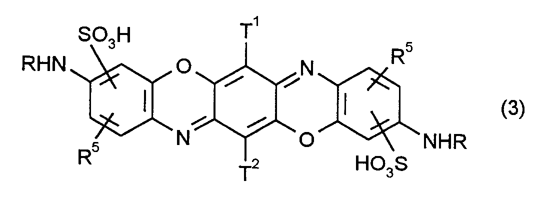
worin R, R⁵, T¹ und T² die angegebene Bedeutung haben und die Sulfogruppe in o-Stellung zum Rest NHR steht, ein Triazinderivat der allgemeinen Formel 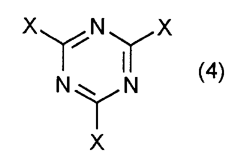
worin X die angegebene Bedeutung, und ein Amin der allgemeinen Formel 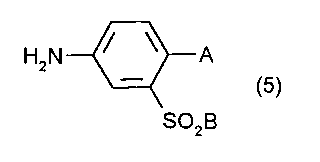
worin A und B die angegebeneBedeutung haben, miteinander umsetzt, wobei man entweder zunächst (3) und (4) kondensiert und die resultierende Zwischenstufe mit (5) umsetzt oder (4) und (5) kondensiert und die resultierende Zwischenstufe mit (3) zu Farbstoffen der Formel (1) umsetzt.

Diese Kondensationsreaktionen werden vorzugweise in wäßriger Lösung und im Temperaturbereich von 0 - 100°C durchgeführt, wobei man die bei den Acylierungsschritten freiwerdende Säure HX, wobei X die angegebene Bedeutung hat, durch Zusatz von Alkali-hydrogencarbonaten, -carbonaten, -hydroxiden oder -phosphaten neutralisiert.

Die Verwendung von basischen Lithiumsalzen wie Lithiumhydroxid oder -carbonat ist bevorzugt.

Triazinderivate der Formel (4) sind beispielweise:
2,4,6-Trichlortriazin, 2,4,6-Trifluortriazin, 2,4,6-Trimethylsulfonyltriazin, 2,4,6-Triethylsulfonyltriazin.

Verbindungen entsprechend der allgemeinen Formel (5) die zur Synthese der erfindungsgemäßen Verbindungen dienen, sind beispielsweise:
4-Dimethylamino-3-(β-sulfatoethylsulfonyl)-anilin, 4-Ethylamino-3-(β-sulfatoethylsulfonyl)-anilin, 4-(N-Morpholino)-3-(β-sulfatoethylsulfonyl)-anilin, 4-N-(β-Sulfatoethyl)-amino-3-(β-sulfatoethylsulfonyl)-anilin, 4-[N-Methyl-N-(β-sultatoethyl)]-amino-3-(β-sulfatoethylsulfonyl)-anilin, 4-N-(β-Sulfatoethyl)-amino-3-(β-sulfatoethylsulfonyl)-anilin, 4-[N-Methyl-N-(β-sulfatoethyl)]-amino-3-(β-sulfatoethylsulfonyl)-anilin, 4-N-(Carboxy-methyl)-amino-3-(β-sulfatoethylsulfonyl)-anilin, 4-N-[β-(4-Sulfophenyl)-ethyl]-amino-3-(β-sulfatoethylsulfonyl)-anilin, 4-Methylamino-3-(β-sulfatoethylsulfonyl)-anilin, 4-N-(γ-Sulfato-n-propyl)-amino-3-(β-sulfatoethylsulfonyl)-anilin, 4-N[β-(β'-Sulfato-ethoxy)-ethyl]-amino-3-(β-sulfatoethylsulfonyl)-anilin, 4-[N-Methyl-N-(sulfato-n-propyl)]-amino-3-(β-sulfatoethylsulfonyl)-anilin, 4-[β-Sulfatoethyl-thio]-3-(β-sulfatoethylsulfonyl)-anilin, 3-(β-Sulfatoethylsulfonyl)-1,4-diaminbenzol, 4-N-(β-Sulfatoethyl)-amino-3-(β-thiosulfatoethylsulfonyl)-anilin, 4-N-(β-Phosphatoethyl)-amino-3-(β-sulfatoethylsulfonyl)-anilin, 4-N-(β-Sulfato-n-propyl)-amino-3-(β-sulfatoethylsulfonyl)-anilin, 4-N-(β-Disulfato-n-propyl)-amino-3-(β-sulfatoethylsulfonyl)-anilin, 4-N-(β-Carboxyethyl)-amino-3-(β-sulfatoethylsulfonyl)-anilin, 4-N-[β-(β'-Sulfatoethylamino)-ethyl]-amino-3-(β-sulfatoethylsulfonyl)-anilin, 4-N-(β-[N'-Methyl-N'-(β-sulfatoethyl)-amino]-ethyl]-amino-3-(β-sulfatoethylsulfonyl)-anilin, 4-N-[β-Sulfato-α-methyl)-ethyl]-amino-3-(β-sulfatoethylsulfonyl)-anilin, 4-Diethylamino-3-(β-sulfatoethylsulfonyl)-anilin, 4-N-β-[4'-(β'-Sulfatoethylsulfonyl)-phenyl]ethyl-amino-3-(β-sulfatoethylsulfonyl)-anilin, 4-β-Sulfatoethoxy-3-(β-3-sulfatoethylsulfonyl)-anilin, 4-[β-(β'-Sulfatoethoxy)-ethoxy-3-(β-sulfatoethylsulfonyl)-anilin, 4-Amino-3-(β-sulfatoethylsulfonyl)-anilin.

4-N,N-Bis-(carboxymethyl)-amino-3-(β-sulfatoethylsulfonyl)-anilin,
4-N,N-Bis-(β-sulfatoethyl)-amino-3-(β-sulfatoethylsulfonyl)-anilin,
4-N,N-Bis-(β-sulfoethyl)-amino-3-(β-sulfatoethylsulfonyl)-anilin.

Die Ausgangsverbindungen der allgemeinen Formel (5) können analog bekannter Verfahrensweisen aus den entsprechenden Aminoverbindungen der allgemeinen Formel (5a) 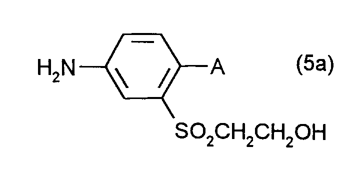
in welcher A die oben angegebene Bedeutung hat, hergestellt werden, so beispielsweise durch Umsetzung mit üblichen Sulfatierungs- oder Phosphatierungsmitteln zur Veresterung in die entsprechenden β-Sulfatoethylsulfonyl- bzw. β-Phosphatoethyl-sulfonyl-Derivate.

Die β-Sulfatoethylsulfonyl-Verbindung entsprechend der allgemeinen Formel (5) kann sodann in an sich bekannter Verfahrensweise in deren Vinylsulfonyl-Verbindung und diese wiederum in deren Thiosulfatoethylsulfonyl-Verbindung überführt werden. Verbindungen entsprechend den allgemeinen Formeln (5) und (5a) sind beispielsweise aus EP-A-01 53 559, EP-A-01 71611 und EP-A-01 97 418 bekannt und können analog den dortigen Angaben hergestellt werden.

Die Herstellung von Verbindungen der Formel (3) erfolgt nach an sich bekannten Methoden durch Kondensation von 1,4-Benzochinonen der Formel 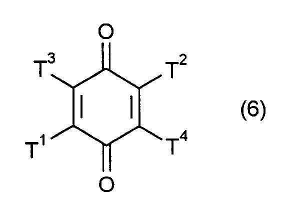
worin T¹und T² die angegebene Bedeutung haben und T³ und T⁴ unabhängig von einander für Chlor, Brom, C₁- C₄-Alkoxy oder Phenoxy stehen, mit Diaminobenzolen der Formel 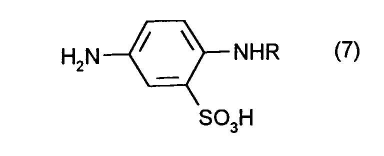
worin R die angegebene Bedeutung hat, zu Verbindungen der Formel 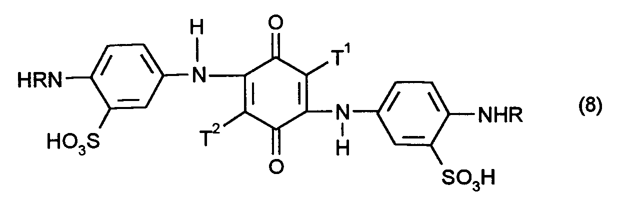
und nachfolgendem Ringschluß der Dianilverbindung (8) zu der Triphendioxazinverbindung (3).

Die Kondensation der Benzochinone der Formel (6) mit den Diaminobenzolen der Formel (7) erfolgt am besten in wäßrigen oder wäßrig-organischem Medium unter Zugabe alkalischer Kondensationsmittel bei pH-Werten von 2 bis 10, vorzugsweise 5 bis 7, und Temperaturen von 0 bis 70°C, vorzugsweise 20 bis 50°C. Man kann auch in rein organischem Milieu unter Zusatz säurebindender Mittel arbeiten.

Alkalische Kondensationsmittel sind beispielsweise Natriumhydrogencarbonat, Natriumcarbonat, Natrium- oder Kaliumacetat, Natron- oder Kalilauge, Natriumphosphate, Natriumborat.

Die Kondensationsprodukte der Formel (8) können durch Aussalzen oder Ansäuern abgeschieden werden. Eine Variante zur Herstellung von Verbindungen der Formel (8) besteht in der Addition von Diaminobenzolen der Formel (7) an 1,4-Benzochinone der Formel 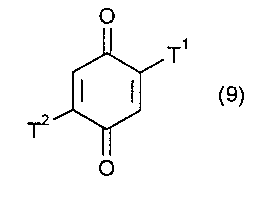
worin
T¹ und T² die angegebene Bedeutung haben, und der Oxidation der primär entstehenden Addukte.

Beispiele für Chinone der Formeln (6) und (9) sind in der Deutschen Offenlegungsschrift 2 823 828 auf Seiten 27 bis 31 genannt.

Geeignete Diaminobenzole der Formel (7) sind beispielsweise folgende:
1,4-Diaminobenzol-2-sulfonsäure, 1-Methylamino-4-aminobenzol-2-sulfonsäure, 1-Ethylamino-4-aminobenzol-2-sulfonsäure,1-β-Hydroxyethylamino-4-aminobenzol-2-sulfonsäure, 1-N-Carboxymethylamino-4-aminobenzol-2-sulfonsäure.

Der Ringschluß der Dianilverbindungen der Formel (8) kann nach an sich bekannten Methoden, wie sie in den Deutschen Offenlegungsschriften 2 122 262, 2 124 080, 2 302 382, 2 344 781, 2 503 611, 2 823 828 und in der Britischen Patentschrift 1 589 915 erwähnt sind, insbesondere in Oleum mit SO₃-Gehalten von 1 bis 50 % bei Temperaturen von 10 bis 80°C, gegebenenfalls mit Zusatz von Oxidationsmittel wie Kalium- oder Ammoniumperoxidsulfat oder organischen Peroxiden vorgenommen werden.

Eine besonders vorteilhafte Variante für die Herstellung von Verbindungen (3) besteht darin, daß man den Ringschluß in Oleum vorzugsweise in Gegenwart von Persulfaten oder katalytischen Mengen Iod oder einer anderen anorganischen Iodverbindung mit den Verbindungen (8) durchführt, s. EP-A-141 359.

Geeignte Iodverbindungen sind beispielsweise Alkaliiodide wie NaJ oder KJ. Der Ringschluß wird vorzugsweise bei Temperaturen von 10 bis 40°C durchgeführt.

Im allgemeinen verwendet man Oleum mit einem SO₃-Gehalt von 20 bis 50 % in Mengen von etwa 3 bis 10 Gew.-Teilen pro Gewichtsteil (8).

Unter den Bedingungen des Ringschlusses in Oleum können in den Dianilverbindungen der Formel (8) vorhandene aliphatische OH-Gruppen sulfatiert und aromatische Ringe sulfiert werden.

Die Isolierung der nach den vorstehenden beschriebenen Verfahren erhaltenen Reaktivfarbstoffe erfolgt in üblicher Weise durch Aussalzen, beispielsweise mit Natrium- oder Kaliumchlorid, oder durch Eindampfen der neutralen wäßrigen Farbstofflösung, vorzugsweise bei mäßig erhöhter Temperatur und vermindertem Druck oder durch Sprühtrocknung. Zur Reinigung können sie einer Ultrafiltration unterzogen werden. Die Farbstoffe können als Feststofformierungen wie auch als konzentrierte Lösungen eingesetzt werden.

Bevorzugte Feststoffformierungen enthalten zusätzlich Puffersubstanzen, die beim Auflösen der Formierung in Wasser einen pH-Wert von 3,5 bis 7,5 insbesondere von 4,5 bis 6,5 geben.

Bevorzugte Flüssigformierungen enthalten zusätzlich Puffersubstanzen und weisen einen pH-Wert von 3,5 bis 7,5, insbesondere 4,5 bis 6,5 auf.

Die verwendeten Puffer sind inert gegenüber den Reaktivgruppen. Beispiele für Puffer sind: Natriumdihydrogenphosphat, Dinatriumhydrogenphosphat, Kaliumdihydogenphosphat, Dikaliumhydrogenphosphat, Nariumacetat, Kaliumacetat, Natriumborat, Kaliumborat, Natriumoxalat, Kaliumoxalat und Natriumhydrogenphthalat. Diese Puffer können für sich allein oder in Mischung verwendet werden.

Die neuen Farbstoffe geben auf Cellulose- sowie natürlichen oder synthetischen Polyamidmaterialien klare, rotstichig-blaue Färbungen. Sie zeichnen sich durch hohe Farbstärke, gute Naß- und Lichtechtheiten aus. Besonders hervorzuheben ist es, daß die Farbstoffe eine gute Löslichkeit und Elektrolytlöslichkeit bei guten Auszieheigenschaften und hoher Farbstoff-Fixierung aufweisen, und daß sich die nicht fixierten Anteile leicht entfernen lassen.

Die angegebenen Formeln sind die der entsprechenden freien Säuren. Die Farbstoffe wurden im allgemeinen in Form von Alkalisalzen, insbesondere der Na-Salze isoliert und zum Färben eingesetzt.

Die in den folgenden Beispielen angegebenen Formeln beziehen sich auf jeweils eines der bei der Umsetzung entstehenden isomeren Reaktionsprodukte, wobei bezüglich der Stellung der Sulfogruppe in den beiden äußeren aromatischen Ringen des Triphendioxazin-Systems auf das unter Formel (1) gesagte verwiesen wird.

### Beispiel 1

0,1 mol 2,9-Diamino-6,13-dichlor-triphendioxazindisulfonsäure (hergestellt nach den Angaben von Beispiel 1 der EP 170 838), die als Dilithiumsalz in 1,5 l Wasser gelöst sind, werden durch Zugabe von Eis auf 10 - 12°C abgekühlt. Man gibt dann 18,5 g Cyanurchlorid zu und kondensiert bei pH 5,0 - 5,5, wobei man die freiwerdende Salzsäure durch Zugabe von Lithiumhydroxid abfängt. Zu diesem Reaktionsgemisch gibt man 42,2 g 4-N-(β-Sulfatoethyl)-amino-3-(β-sulfatoethylsulfonyl)-anilin in Form einer wäßrigen Lösung und erwärmt auf 40 - 50°C und hält dabei einen pH von 5,5 - 6,0 ein. Nach beendeter Kondensation liegt eine klare Lösung vor, aus der der Farbstoff ausgesalzen wird. Nach dem Absaugen, Trocknen und Mahlen erhält man ein dunkelblaues Farbstoffpulver, das sich leicht in Wasser mit klarer blauer Farbe löst. In Form der freien Säure entspricht der Farbstoff der Formel 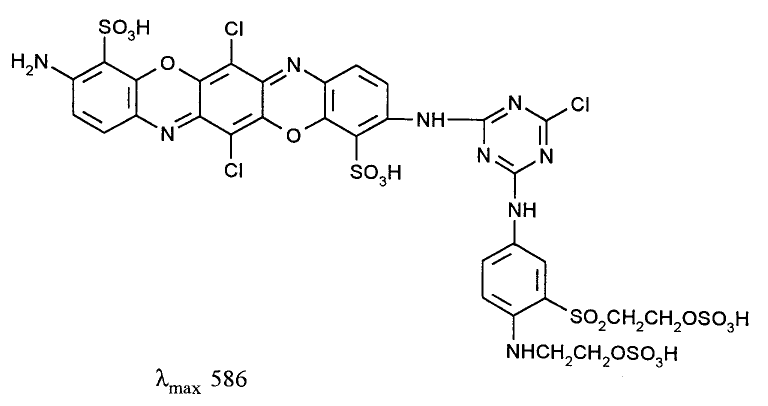
Nach einem der für Reaktivfarbstoffe üblichen Färbeverfahren erhält man damit auf Baumwolle brillante rotstichig blaue Farbtöne.

Nach den Angaben dieses Beispiels erhält man weitere wertvolle Farbstoffe, die Baumwolle in brillanten rotstichig blauen Tönen Farben, wenn man anstelle von 42,2 g 4-N-(β-Sulfatoethyl)-amino-3-(β-sulfatoethylsulfonyl)anilin eine äquivalente Menge der nachstehend aufgeführten Amine einsetzt.

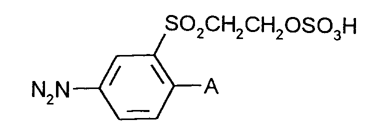

### Beispiel A

2 CH₃-N-CH₂CH₂OSO₃H
3 NH-CH₂CH₂SO₃H
4 CH₃-N-CH₂CH₂SO₃H
5 NH-CH₂COOH
6 CH₃-N-CH₂COOH
7 NH-CH₂CH₂COOH
8 CH₃-N-CH₂CH₂COOH
9 O-CH₂CH₂OSO₃H
10 O-(CH₂)₂O(CH₂)₂OSO₃H
11 S-CH₂COOH
12 S-CH₂CH₂OSO₃H
13 HOOCCH₂-N-CH₂COOH
14 NH-CH₂CH₂NHCOCH₂CH₂COOH
15 NH-(CH₂)₃NHCOCH₂CH₂COOH
16 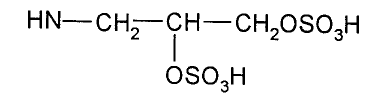
17 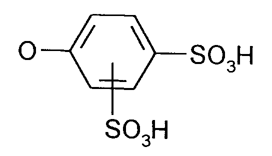
18 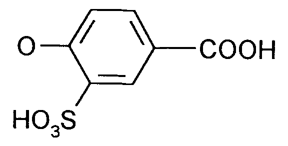
19 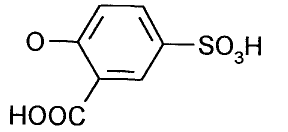
20 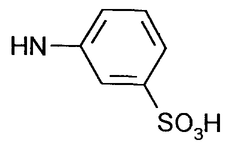
21 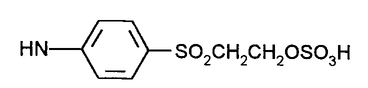
22 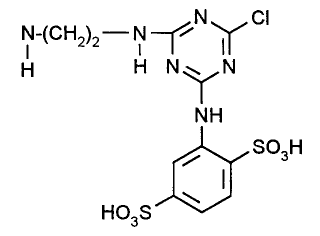
23 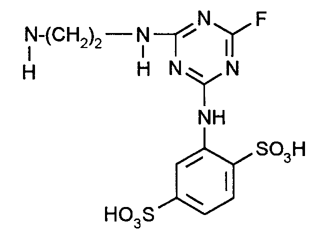
24 HN-(CH₂)₃―SO₂CH₂CH₂OSO₃H
25 HN-(CH₂)₂―SO₂CH₂CH₂OSO₃H
26 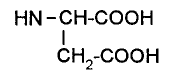
27 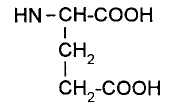
28 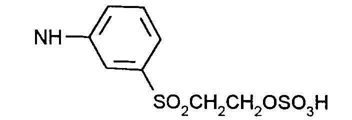
29 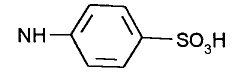
30 NH―CH₃

Weitere wertvolle Reaktivfarbstoffe der Triphendioxazinreihe erhält man nach den Angaben von Beispiel 1, wenn man anstelle von 0,1 mol 1,9-Diamino-6,13-dichlortriphendioxazin-disulfonsäure eine äquivalente Menge der nachfolgend aufgeführten Triphendioxazinverbindungen einsetzt und die in den Beispielen 1 bis 30 verwendeten aromatischen Amine der allgemeinen Formel 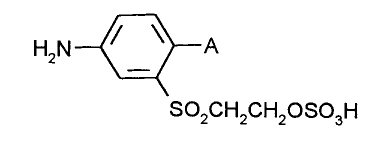
einsetzt.

Beispiele 31 bis 60 eingesetztes Triphendioxazin = 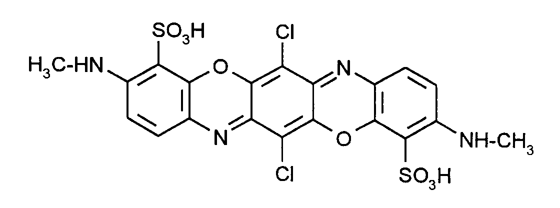
Beispiele 61 bis 90 eingesetztes Triphendioxazin = 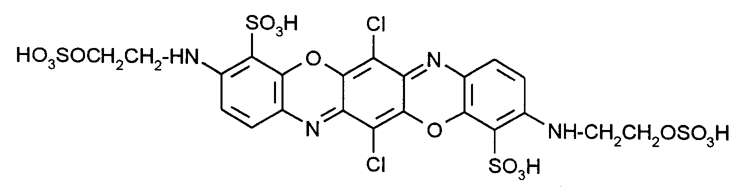
Beispiele 91 bis 120 eingesetztes Triphendioxazin = 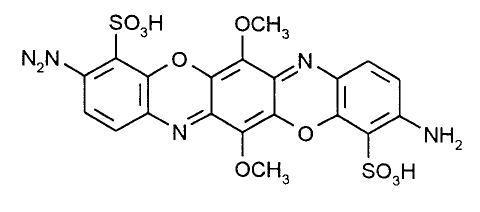
Beispiele 121 bis 150 eingesetztes Triphendioxazin =

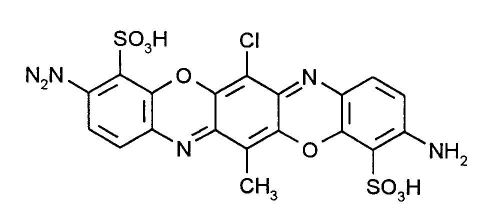

### Beispiel 151

42,2 g 4-N-(β-Sulfatoethyl)-amino-3-(β-sulfatoethylsulfonyl)-anilin, die in 500 ml Eiswasser neutral gelöst sind, werden mit 18,5 g Cyanurchlorid versetzt,wobei man einen pH von 5,0 - 5,5 durch Zutropfen einer Natriumhydrogencarbonatlösung einhält. Nach beendeter Kondensation, wobei in Lösung das folgende Dichlortriazinprodukt vorliegt, 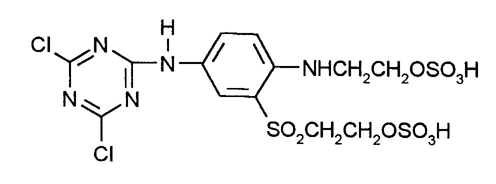
wird eine neutrale Lösung von 0,1 mol des Lithiumsalzes der Triphendioxazinverbindung aus Beispiel 1 zugesetzt und auf 50°C erwärmt. Dabei hält man den pH durch Zugabe von Natriumhydrogencarbonat bei pH 5,5 - 6,5.

Nach beendeter Kondensation wird der Farbstoff wie in Beispiel 1 beschrieben isoliert. Der resultierende Farbstoff ist identisch mit dem nach Beispiel 1 hergestellten Farbstoff.

In der gleichen Weise lassen sich nach den Angaben von Beispiel 151 auch die Farbbstoffe der Beispiele 2 - 150 herstellen.

### Beispiel 152

0,1 mol 2,9-Diamino-6,13-dichlortriphendioxazindisulfonsäure, die als Dilithiumsalz neutral in 1,5 l Wasser gelöst ist, wird durch Zugabe von 500 g Eis auf 0°C abgekühlt. Man tropft 13,5 g Trifluortriazin ein und hält dabei den pH durch Eintropfen von Lithiumhydroxidlösung bei pH 5 - 7. Man gibt dann 42,2 g 4-N-(β-Sulfatoethyl)-3-(β-sulfatoethylsulfonyl)-anilin als neutrale wäßrige Lösung zu und läßt die Temperatur auf 15 - 20°C ansteigen, wobei der pH zwischen 5,5 und 6,5 gehalten wird. Nach beendeter Kondensation wird der Farbstoff ausgesalzen, abgesaugt, getrocknet und gemahlen. Man erhält ein dunkelblaues Farbstoffpulver, das sich leicht in Wasser mit klarer blauer Farbe löst. Der Farbstoff entspricht folgender Formel: 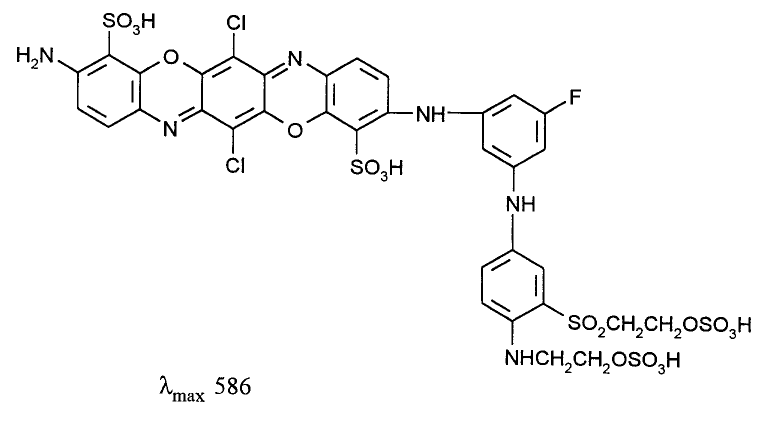
Nach einem der für Reaktivfarbstoffe üblichen Färbeverfahren erhält man damit auf Baumwolle klare rotstichig blaue Färbungen.

### Beispiele 153 - 182

Nach den Angaben von Beispiel 152 erhält man weitere wertvolle Reaktivfarbstoffe, die Baumwolle in brillanten rotstichig blauen Tönen färben, wenn man anstelle von 42,2 g 4-N-(β-Sulfatoethyl)-3-(β-sulfatoethylsulfonyl)anilin eine äquivalente Menge der in den Beispielen 2 - 30 verwendeten aromatischen Amine einsetzt.

## Patentansprüche

1. Reaktivfarbstoffe der Formel 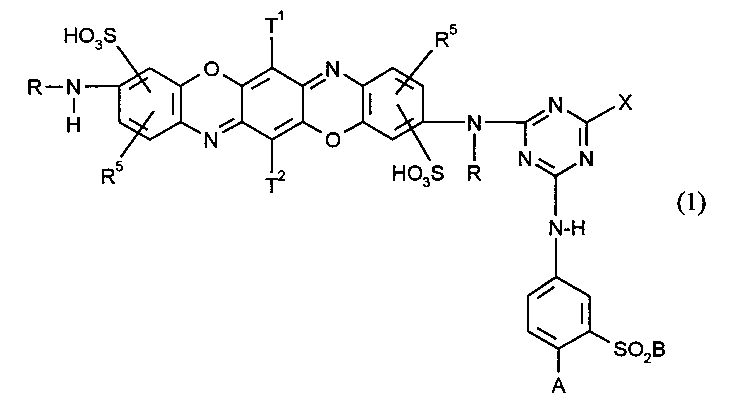 worin
R für Wasserstoff oder gegebenenfalls substituiertes C₁ - C₄-Alkyl steht, unabhängig von den anderen Substituenten dieser Bezeichnung,
T¹ und T² unabhängig voneinander gleich oder verschieden sind und für Wasserstoff, C₁ - C₄-Alkyl, C₁ - C₄-Alkoxy, Phenoxy, Chlor oder Brom stehen,
X Wasserstoff, Methyl oder eine Abgangsgruppe wie Fluor, Chlor, Methylsulfonyl oder Ethylsulfonyl bedeutet,
B für CH=CH₂ oder CH₂CH₂Z steht, wobei Z einen unter Färbebedingungen abspaltbaren Rest bedeutet,
A eine Gruppe der Formel
O-R¹, S-R² oder R³-N-R⁴ bedeutet,
worin
R¹ für einen substituierten aliphatischen Rest oder für einen aromatischen Rest steht, der insbesondere mit einem Substituenten substituiert ist, der die Löslichkeit erhöht,
R² für einen aliphatischen oder aromatischen Rest,
R³ für Wasserstoff, einen aliphatischen, cycloaliphatischen oder araliphatischen Rest und
R⁴ für R³ oder für einen aromatischen Rest steht, oder R³ und R⁴,
gegebenenfalls unter Einschluß eines weiteren Heteroatoms einen Ring bilden können, und worin die Sulfogruppen jeweilig o-ständig zur Gruppe -NR- stehen,
R⁵ H oder ein für Triphendioxazin-Farbstoffe üblicher Substituent bedeutet.

2. Reaktivfarbstoff nach Anspruch 1, dadurch gekennzeichnet, daß bedeuten
R¹ ein aliphatischer oder aromatischer Rest, der mit einem Substituenten substituiert der die Löslichkeit erhöht
R⁵ H.

3. Reaktivfarbstoff nach wenigstens einem der vorhergehenden Ansprüche worin bedeuten
R Wasserstoff
T¹, T² gleich oder verschieden, Chlor oder Methoxy
X Fluor oder Chlor
B CH₂CH₂OSO₃H
A substituiert mit wenigstens einer Carboxy-, Sulfo- und/oder Sulfato-Gruppe.

4. Reaktivfarbstoff nach wenigstens einem der vorhergehenden Ansprüche der Formel

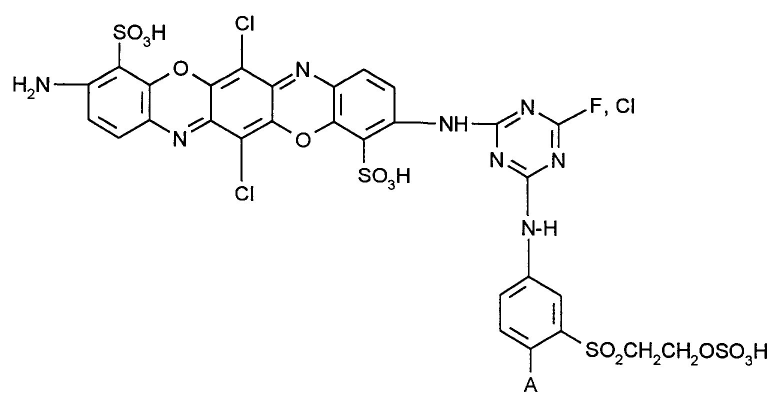

5. Reaktivfarbstoff nach wenigstens einem der vorhergehenden Ansprüche, dadurch gekennzeichnet, daß A bedeutet:
OCH₂CH₂OSO₃H, OCH₂CH₂OCH₂CH₂OSO₃H, SCH₂COOH, SCH₂CH₂OSO₃H, NHCH₂COOH, CH₃NCH₂COOH, NHCH₂CH₂COOH, NHCH₂CH₂SO₃H, CH₃NCH₂CH₂SO₃H, NHCH₂CHOSO₃H, CH₃NCH₂CH₂OSO₃H, NHCH₂CH₂NHCO(CH₂)₁₋₄-COOH, NHCH₂CH₂OCH₂CH₂SO₂CH₂CH₂OSO₃H, NH(CH₂)₂₋₄-SO₂CH₂CH₂OSO₃H

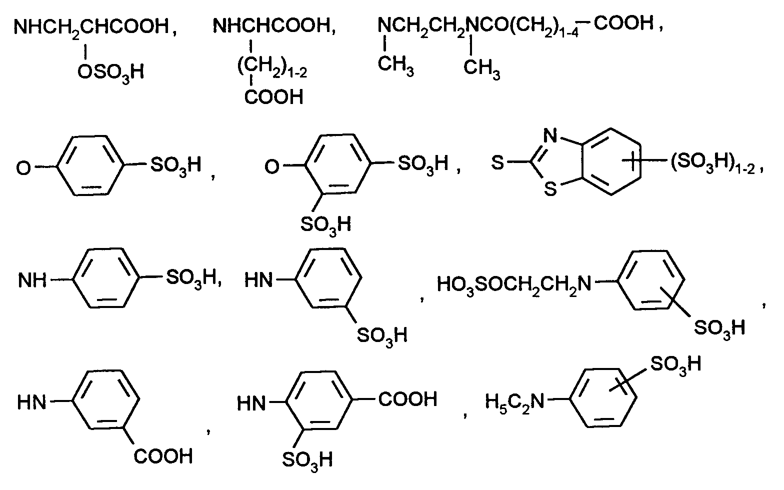

6. Reaktivfarbstoff gemäß Anspruch 1 der Formel 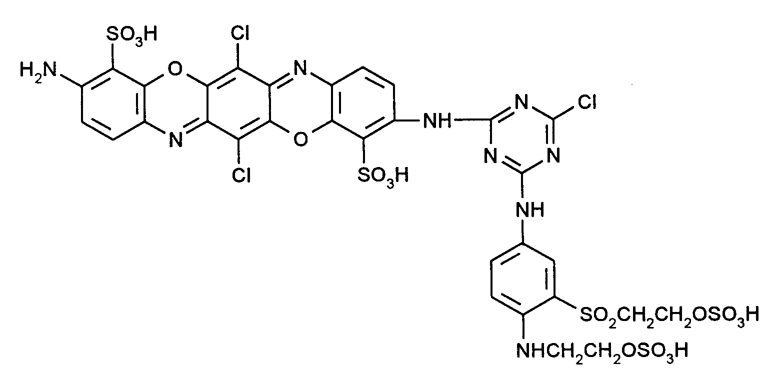 und

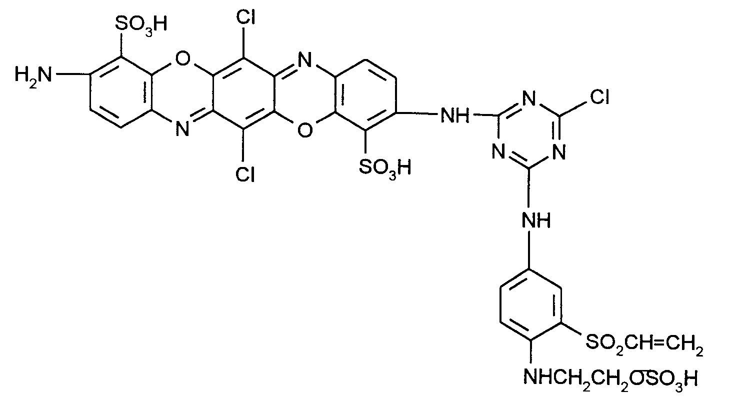

7. Verfahren zur Herstellung eines Farbstoffs gemäß Anspruch 1, dadurch gekennzeichnet, daß man Triphendioxazin-Derivate der allgemeinen Formel 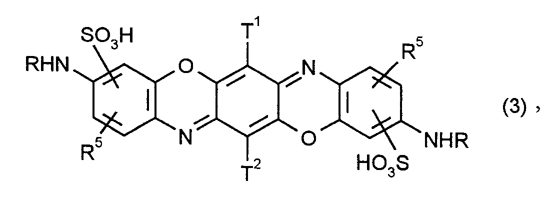 ein Triazinderivat der Formel 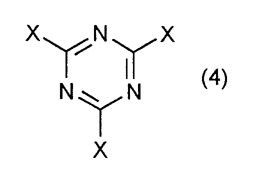 und ein Amin der Formel 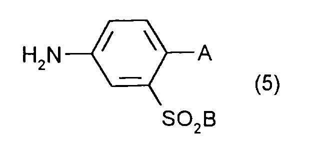 worin die Substituenten die in Anspruch 1 angegebene Bedeutung haben, miteinander umsetzt, wobei man entweder zunächst (3) und (4) kondensiert und die resultierende Zwischenstufe mit (5) umsetzt oder (4) und (5) kondensiert und die resultierende Zwischenstufe mit (3) zu Farbstoffen der Formel (1) umsetzt.

8. Verfahren zum Färben von insbesondere Hydroxyl- oder Amidgruppen enthaltenden Materialien mit einem Reaktivfarbstoff dadurch gekennzeichnet, daß ein Reaktivfarbstoff gemäß Anspruch 1 verwendet wird, Gewebe oder Fasermaterial, welches wenigstens teilweise mit einem Reaktivfarbstoff gemäß Anspruch 1 gefärbt und gegebenenfalls weiter verarbeitet wurde.
